# EUROPEAN PATENT APPLICATION

(11) **EP 2 120 481 A1**
(43) Date of publication of application: **18.11.2009**
(21) Application number: 07849934.0
(22) Date of filing: 30.11.2007
(51) Int. Cl.: H04Q 7/38, H04L 12/56, H04M 3/42, H04M 3/54

(54) **COMMUNICATION CONTROL DEVICE, METHOD, AND COMMUNICATION TERMINAL**

(30) Priority: 13.12.2006 JP 2006335534
(71) Applicant: Sharp Kabushiki Kaisha, Osaka-shi, Osaka 545-8522 (JP)
(72) Inventor: MORIWAKI, Tetsuro, Osaka-shi, Osaka 545-8522 (JP); CHIKATA, Moriya, Osaka-shi, Osaka 545-8522 (JP); YAMADA, Shohei, Osaka-shi, Osaka 545-8522 (JP); HIBI, Keiichi, Osaka-shi, Osaka 545-8522 (JP)
(74) Representative: Müller - Hoffmann & Partner
(86) International application number: PCT/JP2007/073150
(87) International publication number: WO 2008/072488

(57) **Abstract**

It is possible to transfer a call or session establishment request specifying one of the communication terminals in a mobile communication network to an optimal communication terminal in the group. A communication control device (4) includes: session control means (4a) which controls session connection between communication terminals (102 to 106) and a counterpart communication terminal (108); and communication terminal group information managing means (4c) which correlates identification information of the communication terminals (102 to 106) so as to manage the respective communication terminals (102 to 106) as a group (101) when they are connected to a mobile communication network (2) and creates a condition of a service which can be applied to the communication terminals in the group (101). When the counterpart communication terminal (108) makes a session connection request to one of the communication terminals contained in the group (101), the session control means (4a) transfers the session connection request to an optimal communication terminal in the group (101) according to the created service application condition.

## Description

### TECHNICAL FIELD

The present invention relates to a communication control device, a method, and a communication terminal, and, more particularly, to a communication control device for managing a group of a plurality of communication terminals owned by the same user, a communication control method by the device, and a communication terminal.

### BACKGROUND OF THE INVENTION

In conventional mobile communication systems such as GSM (Global System for Mobile Communications) and IMT-2000, the user management is performed with the use of IC cards called SIM (Subscriber Identity Modules) or USIM (Universal Subscriber Identity Module) (hereinafter, SIM and USIM are collectively referred to as USIM cards) (see, e.g., Patent Document 1). If a user subscribes to a mobile communication service provided by a mobile communications carrier, the user is enabled to utilize a mobile communication service by attaching to a communication terminal a USIM card purchased or issued from the mobile communications carrier and storing the subscriber information of the user.

In this case, the communication terminal with the USIM card attached is used to connect to a mobile communication network; the subscriber information of the USIM card is supplied from the communication terminal to the mobile communication network; and the mobile communication network performs the management by individually identifying, authenticating, and registering communication terminals based on the subscriber information. The mobile communication network also processes a call request specifying a public identifier (such as a telephone number, an e-mail address, and SIP-URI) included in the subscriber information of the attached USIM card for the communication terminal included in the subscriber information such that the call is received by the communication terminal.

The mobile communication network has a location management function for supporting movement of the communication terminal and if a location registration is performed from the communication terminal, the mobile communication network is capable of managing the subscriber information of the communication terminal in a correlated manner with the location information of the communication terminal to comprehend who is the current user of the communication terminal and where the current user is located.

In such a conventional subscriber information managing method, if the same user owns a plurality of USIM cards and attaches the respective USIM cards to a plurality of different communication terminals to connect to the mobile communication network, the relevancy of the plurality of the communication terminals, i.e., the user's ownership is not particularly recognized and the communication terminals are independently handled as separate terminals since the USIM cards are different.

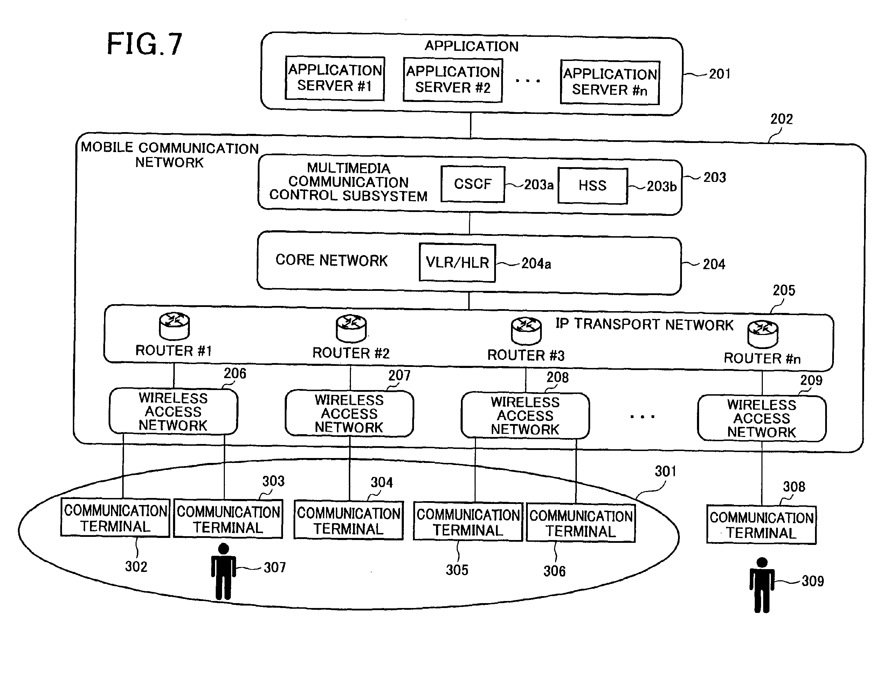

Fig. 7 is a diagram of a schematic configuration of a system including the subscriber information management in a conventional mobile communication network and Fig. 7 includes reference numerals 201 denoting an application, 202 denoting a mobile communication network, 203 denoting a multimedia communication control subsystem, 204 denoting a core network, 205 denoting an IP transport network, 206 to 209 denoting wireless access networks, and 301 denoting a communication terminal group consisting of communication terminals 302 to 306 owned by a user 307. A reference numeral 309 denotes a user other than the user 307 who owns a communication terminal 308. Each of the communication terminals 302 to 306 in the communication terminal group 301 owned by the user 307 are configured to be connectable to the communication terminal 308 through the mobile communication network 202.

The multimedia communication control subsystem 203 is a subsystem for the purpose of implementing additional functions for providing the IP-based multimedia communication service on a packet switching system of the core network 204. The multimedia communication control subsystem 203 is made up of CSCF (Call Session Control Function) 203a that provides a session control function among communication, HSS (Home Subscriber Server) 203b that is a subscriber information managing device, etc.

SIP (Session Initiation Protocol) is employed as a session control protocol. The CSCF 203a provides a state control function for calls and sessions between the communication terminals and interfaces with the HSS 203b that functions as a register server for users or communication terminals in the SIP to perform a registration process of states and identification information of users capable of utilizing/communicating with the service and perform the session connection control by managing and transferring information for controlling sessions.

The application 201 is provided that utilizes the basic functions provided by the multimedia communication control subsystem 203 to provide a further advanced application service to users. The CSCF 203a also has an interface means of supplying information related to sessions and users/communication terminals to the application 201 and accepting the control of sessions from the application 201

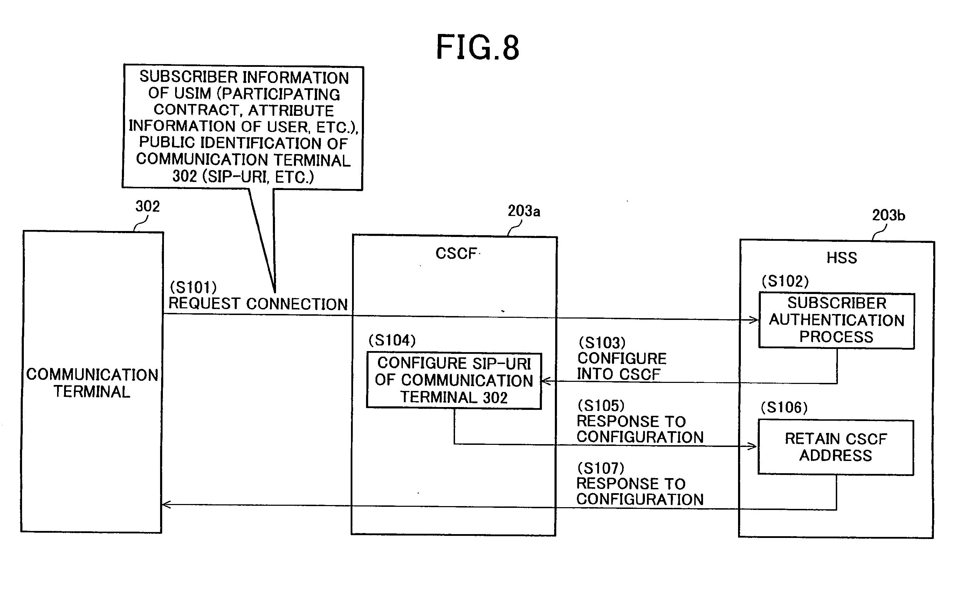

Fig. 8 is a flowchart for explaining a process when the communication terminal registers subscriber information to the multimedia communication control subsystem 203. In the above configuration shown in Fig. 7, for example, when the communication terminal 302 becomes communicatable to the mobile communication network 202 due to power-on, etc., the HSS 203b accepts a subscriber information notification from the communication terminal 302 in the multimedia communication control subsystem 203 (step S101). The HSS 203b executes the authentication process based on the subscriber information and registers the communication terminal (step 102).

The HSS 203b also executes a process of registering the public identifier (such as SIP-URI) of the communication terminal included in the subscriber information to the CSCF 203a (step S103). The CSCF 203a stores the public identifier transferred from the HSS 203b (step S104) and returns a response to the HSS 203b (step S105). The HSS 203b stores the address of the CSCF 203a and the public identifier of the communication terminal 302 in a correlated manner (step S106) and returns a response indicative of the registration into the mobile communication network to the communication terminal 302 (step S107).

The process at step S106 is a process necessary for inquiring from HSS in another domain to HSS in the home domain about an address of CSCF with a calling communication terminal registered when the HSS 203b managing the subscriber information, etc. , is the HSS and the CSCF disposed in the home domain (mobile communication network provided by the subscribed communication carrier) of the service provider to which the user subscribes and a communication terminal of another user belonging to another domain makes a call.
Patent Document 1: Japanese Laid-Open Patent Publication No. 2006-121335

### DISCLOSURE OF THE INVENTION

### PROBLEMS TO BE SOLVED BY THE INVENTION

Since conventional subscriber information managing method including Patent Document 1 described above only assumes a situation where one user utilizes one communication terminal, even if the same user attaches a plurality of USIM cards to a plurality of communication terminals, the communication terminals are not managed as a correlated group for the same user. This is not particularly problematic on the premises that a user has one communication terminal and that services are voice communication and simple e-mail as in the case of conventional portable telephones.

However, if high-quality multimedia services and advanced services with various intricately combined functions are provided in future mobile communication networks, a user wants to own a plurality of communication terminals accessible to a mobile communication network and services and to use these communication terminals individually depending on situations of the user, contents of services, communication counterparts, desired quality, etc.

For example, if a user owns a plurality of communication terminals, the user requests to share functions among the communication terminals in accordance with the respective characteristics and to use these communication terminals individually depending on situations of the user as a mutually coordinated communication terminal group rather than separately using the communication terminals and thought is given to transfer and establish calls or sessions from a communication terminal of another user to a desired communication terminal within the group.

The service providers or communication carriers want to enhance the convenience and provide efficient services matched with the characteristics and resource allocations of the mobile communication network by collectively managing a plurality of communication terminals owned by the same user as a group to provide services satisfying the above user's requests.

However, since users and communication terminals are correlated and managed one-on-one in the conventional subscriber information managing methods as described above, it is difficult to comprehend that a user owns a plurality of communication terminals, in other words, that a plurality of communication terminals belongs to the same user. This is because if a user owns a plurality of communication terminals, no means exists for collectively identifying and managing these communication terminals as a group. Giving no consideration to handling communication terminals as a group leads to the lack of information necessary for providing a service to a group, for example, information of preferences indicative of which communication terminal in a group preferentially receive the provision of service, information of service available because a group is formed, information about a session ability that can be implemented by a combination of a plurality of communication terminals, etc.

Therefore, a user is unable to freely select a communication terminal to be utilized in a service. Specifically, for example, in Fig. 7 described above, even if the user 307 owns or is able to use a plurality of communication terminals, when the user 309 makes a request for establishing a session to the user 307, it is problematic that the user 307 is unable to freely select a communication terminal receiving the call since the user 309 preliminarily specifies one of the communication terminals owned by the user 307 to make the call and request the establishment of the session.

Even in a situation where user 307 wants to utilize the communication terminal 302, if the user 309 specifies the public identifier such as a telephone number or an e-mail address of the communication terminal 306 to make a call, the user must once receive the call in the communication terminal 306 and subsequently perform the operation of transferring the call or the session to the communication terminal 302.

Although consideration is given to a technique of a personal area network (PAN) with a plurality of communication terminals creating a small scale network through user's operations or autonomic operations of communication terminals to accommodate such problems, it is problematic that a communication terminal out of a short range is unable to join PAN since a plurality of communication terminals must be connected to each other over short-range wireless or wired means and no means exists for managing a plurality of communication terminals as PAN in a mobile communication network.

The present invention was conceived in view of the above situations and it is therefore an object of the present invention to correlate and manage public respective identifiers of communication terminals making up a group due to specification from the user as a group and to manage entrance and exit of a communication terminal into/from a group and availability of the communication terminal in accordance with whether the communication terminals belonging to the group are configured so as to manage a plurality of communication terminals owned by a user as a group in a mobile communication network.

It is another object of the present invention to identify a plurality of available communication terminals as a group and to perform control such that, when another communication terminal not included in the group makes a call request or a session establishment request with the specification of an individual public identifier (such as a telephone number or SIP-URI) of a communication terminal included in the communication terminal group, the communication terminal having the public identifier is determined as a communication terminal belonging to the group to set the call or the session with a communication terminal typically utilized in the group.

It is yet another object of the present invention to provide a mobile communication system capable of enhancing the convenience of the user, utilizing services with the optimum quality, and effectively taking advantage of abilities of communication terminals by enabling simple and suitable selection and determination of the optimum communication terminal for a certain service.

### MEANS FOR SOLVING THE PROBLEMS

In order to solve the above problem, a first technical means of the present invention is a communication control device in a mobile communication network comprising: a communication terminal group information managing means that manages a plurality of communication terminal specified by a user as a communication terminal group of the user.

A second technical means is the communication control device as defined in the first technical means, wherein the plurality of the communication terminals managed as the communication terminal group of the user are communication terminals having respective unique public identifiers utilized for identifying and managing individual communication terminals in the mobile communication network.

A third technical means is the communication control device as defined in the first or second technical means, further comprising a session control means that manages and controls call connection or session connection between a communication terminal and a counterpart communication terminal that is a communication counterpart thereof, wherein if a call connection or session connection request message for any one of the communication terminals within the communication terminal group is received from a counterpart communication terminal not included in the communication terminal group, the session control means selects at least one communication terminal from the communication terminals of the communication terminal group and sends out a call connection or session connection request message for the selected communication terminal to perform control to achieve call connection or session connection between the counterpart communication terminal not included in the communication terminal group and the selected communication terminal.

A fourth technical means is the communication control device as defined in the third technical means, wherein when the communication terminal managed as the communication terminal group of the user executes a configuration process into the communication control device, the communication terminal group information managing means identifies and manages the communication terminal subjected to the executed configuration process as a communication terminal valid within the communication terminal group and as a candidate for a communication terminal to be selected from the communication terminal group.

A fifth technical means is the communication control device as defined in the third or fourth technical means, wherein when a configuration cancel process of a communication terminal managed as a communication terminal valid within the communication terminal group is executed for the communication control device, the communication terminal group information managing means manages the configuration-canceled communication terminal as a communication terminal not valid within the communication terminal group such that the communication terminal is not selected from the communication terminal group.

A sixth technical means is the communication control device as defined in any one of the third through the fifth technical means, wherein at least one communication terminal is selected from the communication terminal group in accordance with a communication service specified by a call connection or session connection request message received from a counterpart communication terminal not included in the communication terminal group.

A seventh technical means is the communication control device as defined in the sixth technical means, wherein the communication terminal group information managing means manages priority information for each of the communication terminals in the communication terminal group correspond to a type of communication service and wherein the session control means refers to the priority information for the specified communication service to select at least one communication terminal from the communication terminal group.

An eighth technical means is a communication control method of managing and controlling call connection or session connection between a communication terminal and a counterpart communication terminal that is a communication counterpart thereof, the method comprising the steps of: managing a plurality of communication terminals having public identifiers preliminarily specified by a user as a communication terminal group of the user in advance; identifying and managing the communication terminal subjected to an executed configuration process as a communication terminal valid within the communication terminal group when the communication terminal included in the communication terminal group executes the configuration process for a mobile communication network; receiving a call connection or session connection request message for any one of the communication terminals in the communication terminal group from a counterpart communication terminal not included in the communication terminal group; selecting at least one communication terminal from the communication terminals in the communication terminal group; and sending out a call connection or session connection request message for the selected communication terminal to perform control to achieve call connection or session connection between the counterpart communication terminal not included in the communication terminal group and the selected communication terminal.

A ninth technical means is the communication control method as defined in the eighth technical means, wherein at least one communication terminal is selected from the communication terminal group in accordance with a communication service specified by the call connection or session connection request message received from the counterpart communication terminal not included in the communication terminal group.

A tenth technical means is a communication terminal connecting to a communication control device on a mobile communication network, comprising: a means that configures into the communication control device a public identifier for identifying and managing the communication terminal in the communication control device, the communication terminal being identified and managed as a communication terminal valid in a communication terminal group formed with a communication terminal having another public identifier specified by a user and as a candidate for a communication terminal to be selected from the communication terminal group at the execution of a connection process to the mobile communication network.

An eleventh technical means is the communication terminal as defined in the tenth technical means, further comprising a means that notifies the communication control device of inclusion into a communication terminal group formed with a communication terminal having another public identifier.

### EFFECT OF THE INVENTION

According to the present invention, a plurality of communication terminals may be managed not only individually and independently but also through a concept of group with the relevancy and a service taking advantage of the features and benefits as a group may be provided.
A user may always establish a session with a suitable communication terminal in a group, which enables the enhancement of the convenience of the user, the provision of services with the optimum quality, the effective utilization of individual abilities of the communication terminals, and the effective utilization of resources in a network.
Communication terminals may integrally be managed as a group even when the communication terminals are distributed regardless of distances of the communication terminals included in the group and an effort of creating a small scale network using a short-range communicating means among the communication terminals is not required.

### BRIEF DESCRIPTION OF DRAWINGS

[Fig. 1] Fig. 1 is a diagram of a schematic exemplary configuration of a mobile communication network system that is an embodiment of the present invention.
[Fig. 2] Fig. 2 is a diagram of an example of group information managed in a communication terminal group information managing means.
[Fig. 3] Fig. 3 is a flowchart for explaining an exemplary operation of a session control means, a subscriber information managing means, and the communication terminal group information managing means within an IP core network when a group is made up of a plurality of communication terminals.
[Fig. 4] Fig. 4 is a diagram of an example of information indicated as service application conditions.
[Fig. 5] Fig. 5 is a diagram of an example when a service profile is replaced in the session control means in accordance with the example of the service application conditions shown in Fig. 4.
[Fig. 6] Fig. 6 is a flowchart for explaining an example of a communication control method according to the present invention.
[Fig. 7] Fig. 7 is a diagram of a schematic configuration of a system including subscriber information management in a conventional mobile communication network.
[Fig. 8] Fig. 8 is a flowchart for explaining a process when a communication terminal is registered in a multimedia communication control subsystem.

### EXPLANATIONS OF REFERENCE NUMERALS

1, 201...application; 2, 202...mobile communication network; 3...IP core network; 4...communication control device; 4a...session control means; 4b...subscriber information managing means; 4c...communication terminal group information managing means; 5, 205...IP transport network; 6 to 9, 206 to 209...wireless access network; 101, 301...communication terminal group (group); 102 to 106, 108, 302 to 306, 308...communication terminal; 107, 109, 307, 309...user; 203...multimedia communication control subsystem; 203a...CSCF; 203b...HSS; 204...core network; and 204a...VLR/HLR.

### PREFERRED EMBODIMENTS OF THE INVENTION

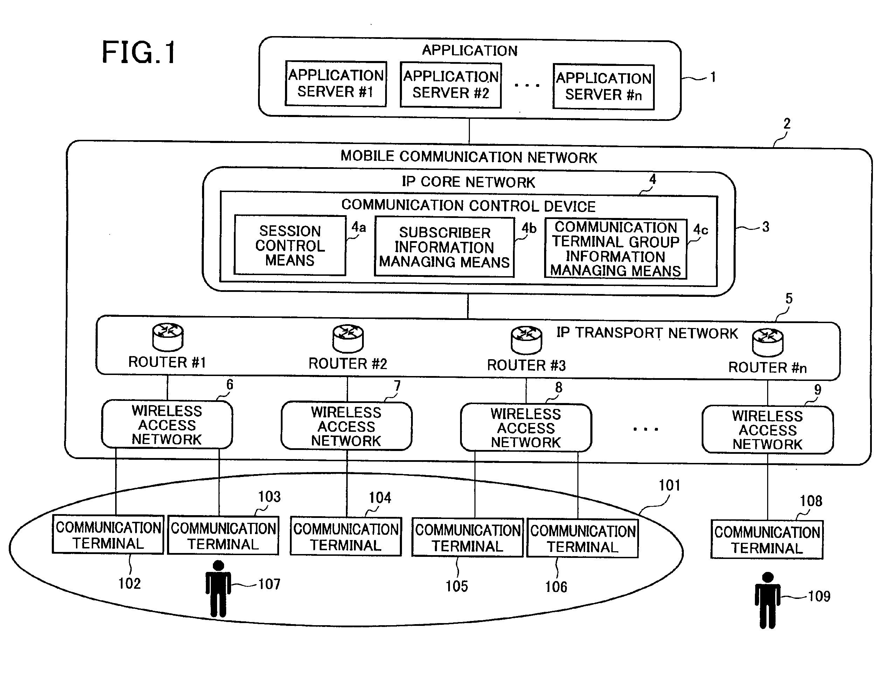

Fig. 1 is a diagram of a schematic configuration of a mobile communication network system that is an embodiment of the present invention and Fig. 1 includes reference numerals 1 denoting an application, 2 denoting a mobile communication network, 3 denoting an IP core network, 4 denoting a communication control device, 5 denoting an IP transport network, and 6 to 9 denoting wireless access networks. A reference numeral 101 denotes a communication terminal group (often referred to as a group 101) consisting of communication terminals 102 to 106 owned by a user 107. Each of the communication terminals 102 to 106 included in the communication terminal group 101 is attached with a USIM card and capable of connecting to the mobile communication network 2. The communication terminal 108 is owned by a user 109 and is a communication terminal to be a communication counterpart of the communication terminals 102 to 106.

The respective communication terminals are capable of accessing to the mobile communication network 2 through the wireless sections and the wireless access networks 6 to 9 are made up of wireless base stations, base station management systems, etc., as in the case of conventional technologies. The IP transport network 5 includes routers transferring data for the communication terminals executing sessions as in the case of conventional technologies. The IP core network 3 is a network and control system that controls the IP transport network 5 and includes the communication control device 4 that performs the connection control of the respective communication terminals, the mobility management, and the session control between the communication terminals. The communication control device 4 includes a session control means 4a that performs the session control and the state management, a subscriber information managing means 4b that manages the location information of the respective communication terminals and the subscriber information of users utilizing the respective communication terminals, and a communication terminal group information managing means 4c for managing a group of a plurality of communication terminals.

Since the mobile communication network 2 of this embodiment is provided with a control function for a multimedia communication service in the IP core network 3, functions included in a multimedia communication control subsystem of the conventional technologies are contained as a portion of the function of the IP core network in this description. More specifically, functions such as CSCF and HSS of the conventional technologies are included in the session control means 4a and the subscriber information managing means 4b of the communication control device 4. However, the present invention is apparently applicable even when the multimedia communication control function is configured as a subsystem as in the conventional technologies.

At the time of power-on, the communication terminals 102 to 108 supplies the subscriber information stored in the respective attached USIM cards to the subscriber information managing means 4b of the communication control device 4 and, once the subscriber information managing means 4b authenticates the communication terminals, the respective communication terminals are registered into the mobile communication network and becomes available for communication.

The subscriber information managing means 4b manages the subscriber information of the registered communication terminals and the communication terminal group information managing means 4c correlates the public identifiers of the respective communication terminals to manage that the communication terminals 102 to 106 are communication terminals that should be managed as a group. The session control means 4a acquires the public identifier included in the subscriber information with the subscriber information managing means 4b to perform the session establishment control for a session establishment request with the public identifier specified from a certain user (communication terminal) to another user (communication terminal). If the communication terminal group information managing means 4c notifies that the communication terminal having the specified public identifier makes up a group along with other communication terminals, the session control means 4a establishes a session in accordance with a session establishment condition for the group.

The session control means 4a determines whether a process with the application 1 is necessary based on the subscriber information and a type and an attribution of the requested session and acquires instructions and information from application servers of the application 1 as needed to perform the control for connecting a suitable session, the control for transferring the session, etc. The application 1 includes application servers providing application services such as an advanced multimedia communication service on the session requested the establishment, as in the case of conventional technologies. If complicated session control must be performed, the application 1 supports functions for connecting the session such as instruction and control of the session control means 4a.

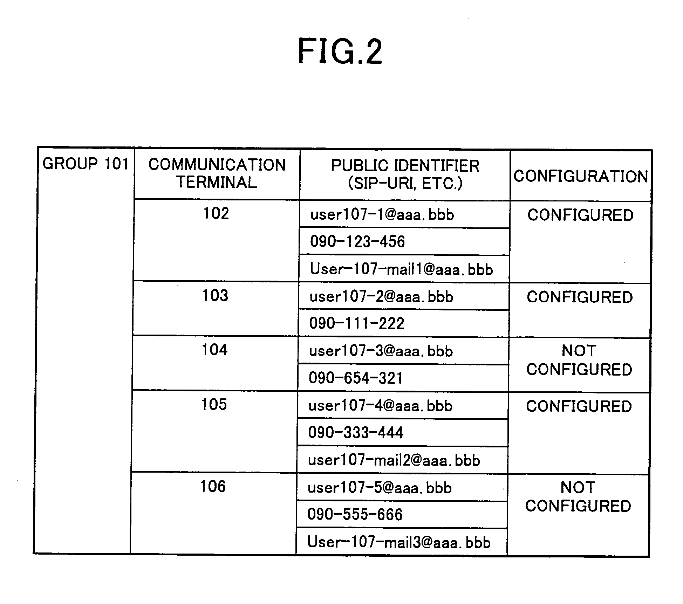

Fig. 2 depicts a method for managing a plurality of communication terminals as a group in the communication terminal group information managing means 4c. For example, the communication terminals 102 to 106 are managed as communication terminals included in the group 101 created because of the ownership of the same user in accordance with preliminary registration, notification, etc., from a user. The information indicative of the communication terminals 102 to 106 may be IMEI, which is a unique identifier specific to a communication terminal, or may be other pieces of information capable of uniquely identifying a communication terminal. The communication terminals are managed in conjunction with the public identifiers included in the subscriber information of the USIM cards attached to the communication terminals.

If the communication terminals 102 to 106 included in the group 101 are authenticated and the registration process is executed in the subscriber information managing means 4b, the communication terminal group information managing means 4c is notified of registration of the communication terminals by the subscriber information managing means 4b and recognizes and manages the communication terminals entering into the configured state in the group 101.

As shown in Fig. 2, if the communication terminals 102, 103, 105 are registered in the subscriber information managing means 4b, the communication terminal group information managing means 4c is notified of the registration and stores information indicative of the configuration of each of the communication terminals 102, 103, 105 to identify that the communication terminals 102, 103, 105 are valid communication terminals in the group.

If a user uses a communication terminal owned by the user to notify the communication control device 4 that the communication terminal is to be included in the group 101, the communication terminal group information managing means 4c of the communication control device 4 adds and stores the unique identification information such as IMEI, the public identifier, etc., of the communication terminal as the information of the communication terminal included in the group 101. Since the group configuration is not determined in advance and a communication terminal may newly be added or eliminated, it is more desirable that the above information may be supplied from the user's communication terminal as needed.

When any notified communication terminal is authenticated and the registration process is executed in the subscriber information managing means 4b, the communication terminal group information managing means 4c receives the notification of registration to determine that the registered communication terminal is an active communication terminal in the group.

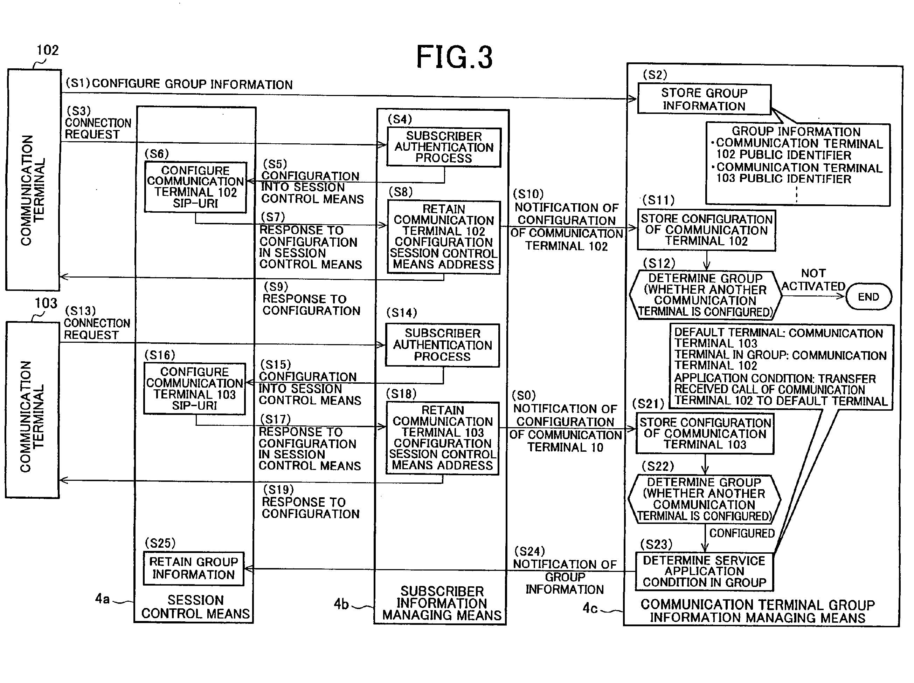

Fig. 3 is a flowchart for explaining an exemplary operation of the session control means 4a, the subscriber information managing means 4b, and the communication terminal group information managing means 4c in the communication control device 4 within the IP core network 3 when a group is made up of the communication terminals 102 and 103. The communication terminals 102 and 103 are communication terminals owned by the same user and communication terminals included in the group 101. The communication terminal group information managing means 4c preliminarily stores information indicating that the communication terminals 102 and 103 are communication terminals capable of making up a group with each other in accordance with notification from any communication terminal of the user or registration by the administrator (steps S1 and S2).

When the communication terminal 102 becomes communicatable to the mobile communication network 2 due to power-on or movement into a communication range, the communication terminal 102 notifies the subscriber information managing means 4b of the subscriber information of the USIM card (step S3). This connection request has a meaning for authenticating the communication terminal in the subscriber information managing means 4b and a meaning for registering the public identifier (such as a telephone number and an SIP-URI) of the user into the session control means 4a as a process of previous step before providing a service as in the conventional case. The subscriber information managing means 4b in this case is a subscriber information managing means of a network (home network) of the service provider to which the user subscribes. To the subscriber information notification message at step S3, information may also be added to request the group 101 including the communication terminal 102 to be configured as a group.

The subscriber information managing means 4b executes the authentication process of the subscriber from the user's subscriber information of the notification (step S4). The subscriber information managing means 4b notifies the session control means 4a of the public identifier included in the subscriber information of the communication terminal 102 and the session control means 4a executes the registration process of the public identifier of the communication terminal 102 (steps S5 and S6).

When the session control means 4a returns a response indicative of the execution of the registration process, the subscriber information managing means 4b stores the address of the session control means 4a and returns a response to the communication terminal 102 (steps S7 to S9).

The subscriber information managing means 4b then notifies the communication terminal group information managing means 4c of the public identifier of the USIM card attached to the communication terminal 102 to execute a process of configuring the communication terminal 102 in the group (step S10). The communication terminal group information managing means 4c accepts and stores the notification (step S11). As a result, the communication terminal 102 is turned to the active state and managed as a configured valid communication terminal among the communication terminals included in the group. It is further checked whether another communication terminal (the communication terminal 103 in the example of Fig. 3) available for making up the group with the communication terminal 102 is configured (step S12). Since the communication terminal 103 is not yet configured at this point, a valid communication terminal by default in the group is the communication terminal 102.

If the user subsequently performs an operation such as powering on to make the communication terminal 103 connectable, the communication terminal 103 executes the same process as steps S3 to S9 of the communication terminal 102 for performing the authentication and the registration of the communication terminal 103 (step S13 to S19). On this occasion, as is the case with the above communication terminal 102, information may also be added to request the group 101 including the communication terminal 103 to be configured as a group.

The subscriber information managing means 4b then notifies the communication terminal group information managing means 4c of the identification information of the communication terminal 103 and the public identifier of the USIM card attached to the communication terminal 103 to execute a process of configuring the communication terminal 103 as is the case with the process of above step S10 (step S20). The communication terminal group information managing means 4c accepts and stores the notification (step S21).

The communication terminal group information managing means 4c then checks whether another communication terminal (the communication terminal 102 in the example of Fig. 3) available for making up the group with the communication terminal 103 is configured (step S22). Since the communication terminal group information managing means 4c has memorized in the process of above step S11 that the communication terminal 102 is configured in the group, the communication terminal group information managing means 4c recognizes that both the communication terminal 102 and the communication terminal 103 are in the configured state for making up the group 101 and are valid communication terminals. The communication terminal group information managing means 4c manages information of service application conditions such as conditions of transfer within the group (step S23).

The communication terminal group information managing means 4c notifies the session control means 4a with the respective communication terminal registered of the information related to the service application conditions created at step S23 and the public identifiers of the effective communication terminals active in the group (step S24). The session control means 4a stores a service profile correlated with the public identifiers (such as SIP-URI) of the communication terminals 102 and 103 based on the information of the service application conditions (step S25) and refers to the service profile to establish a session for the communication terminal 102 or 103 if another communication terminal makes a session establishment request.

The service application conditions are described as information indicative of which is a default communication terminal in the group and information of other active communication terminals in the group. By way of example, a communication terminal configured later for a group is defined as a default communication terminal. This is because the communication terminal configured later is the last communication terminal connected to the mobile communication network by a user and is more likely to be used preferentially as compared to other communication terminals.

Although the user may utilize a plurality of communication terminals as a group, the user is less likely to us utilize a plurality of communication terminals for a service at the same time and often selects and uses one of the communication terminals. Therefore, if the communication terminal configured later is set as the default communication terminal in the group, an actual status of the user' s behavior may more precisely be reflected. The default communication terminal may be determined in such a method or, for example, when the communication terminal 102 makes a request for configuration, information may be added to notify that the communication terminal 102 is registered as the default communication terminal in the group for the preferential use in the service.

In this case, if the communication terminal 103 is subsequently configured, the communication terminal 102 is defined as the default terminal without modification unless the configuration request of the communication terminal 103 includes a request for setting the communication terminal 103 as the default communication terminal. If the communication terminal 102 requests configuration as the default communication terminal and the communication terminal 103 also requests configuration as the default communication terminal later, the communication terminal 103 configured later is defined as the default communication terminal and the information defining the communication terminal 102 as the default communication terminal is overwritten to determine the communication terminal 103 as the default communication terminal.

The notification may include information for registering different default communication terminals depending on services in such a way that the communication terminal 102 is utilized as the default communication terminal when receiving services such as voice and video conferences while another communication terminal is utilized as the default communication terminal for other services.
Contrary to the method described above, the communication terminal 102 configured first may be defined as the default communication terminal and if another communication terminal 103 in the group is configured later, the configuration may be processed such that the default communication terminal is not changed by prioritizing the preceding communication terminal.

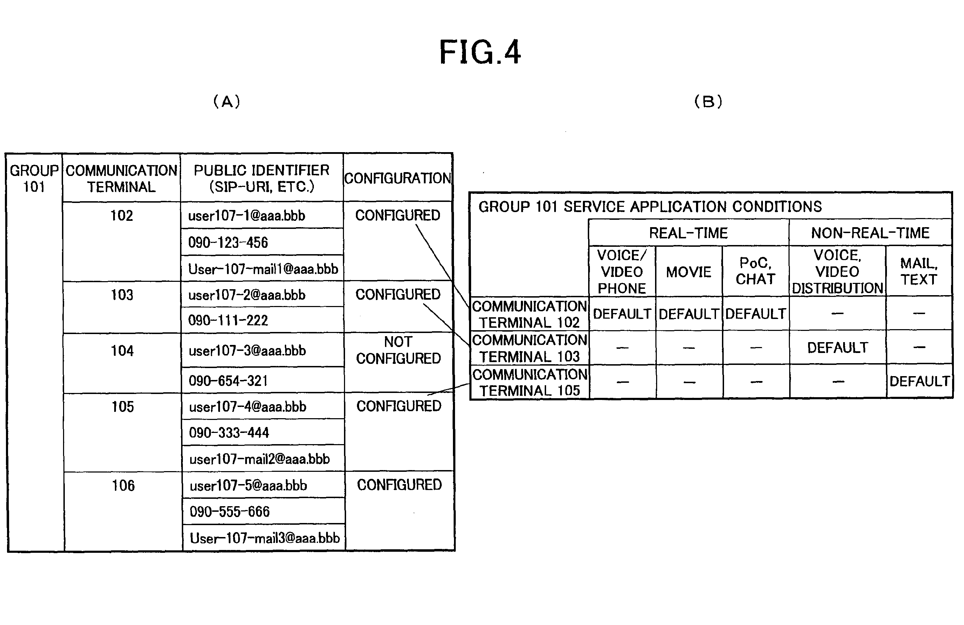

Fig. 4 depicts information indicated as the service application conditions in the above case. The communication terminal group information managing means 4c manages the communication terminals 102 to 106 as the communication terminals included in the group 101 as shown in Fig. 4 (A) and if the communication terminals 102, 103, and 105 are configured, the communication terminals are recognized and stored as communication terminals configured and valid in the group 101.

The service application conditions for the communication terminals 102, 103, and 105 configured and valid in the group 101 are then managed as shown in Fig. 4(B). For example, if the configuration request of the communication terminal 102 includes information indicative of the operation as the default communication terminal at the time of the real-time communications, the communication terminal 102 is managed to be the default communication terminal for the real-time communications such as telephone calls. If notification is made to request for setting the default communication terminal other than the communication terminal 102 in the case of the non-real-time communications, the communication terminal 130 or the communication terminal 105 is set as the default communication terminal for the non-real-time communications.

If notification is made to request for setting the communication terminal 103 as the default communication terminal in the case of the music and video distribution and setting the communication terminal 105 as the default communication terminal in the case of e-mail among the non-real-time communications, the communication terminal 103 is set as the default communication terminal for the music and video distribution of the non-real-time and the communication terminal 105 is set as the default communication terminal for e-mail, etc., as shown in Fig. 4(B). The default communication terminal may be set for each service and application in detail or the setting may be performed depending on categories of services such that the communication terminal 103 is set as the default communication terminal in the case of services requiring large-volume data and that the communication terminal 105 is set as the default communication terminal in other cases.

The service application conditions are also managed based on the state of configuration in the group 101 with the use of information related to individual abilities of the communication terminals in the group 101. For example, the models of the communication terminals are determined from the communication terminal identification information such as IMEI and available services, etc. , are determined in accordance with the models to set the priorities of the communication terminals in the group 101 depending on the service.

When the respective communication terminals are configured, the communication terminal group information managing means 4c supplies the service application conditions to the session control means 4a where the configured communication terminals are registered. The session control means 4a manages the service profiles corresponding to the public identifiers of the respective communication terminals based on the supplied information.

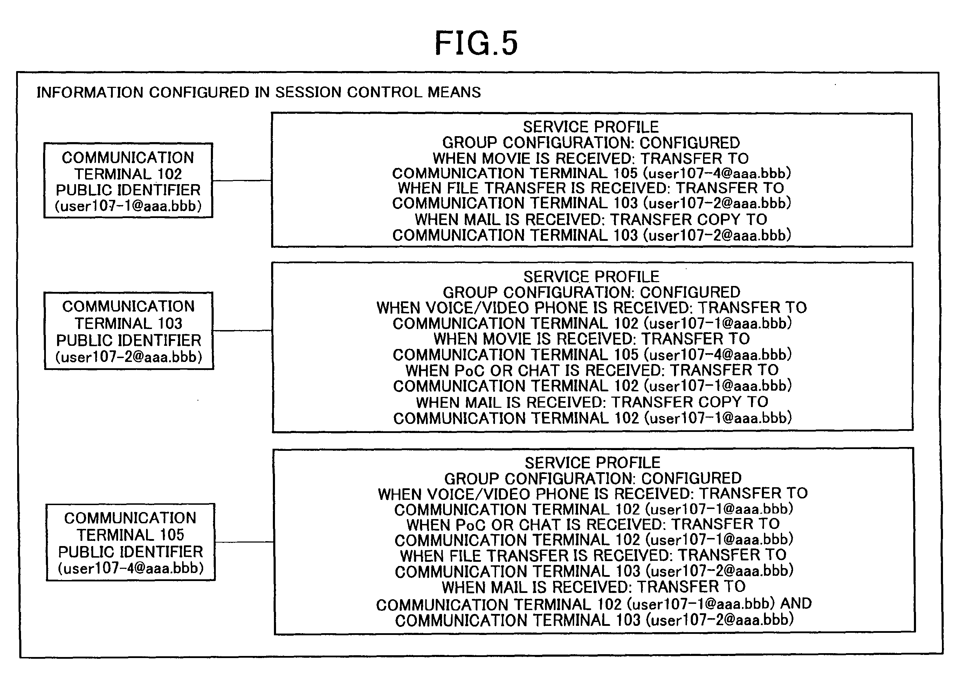

An example shown in Fig. 5 exemplarily illustrates the service profiles of the respective communication terminals managed in the session control means 4a in accordance with the example of the service application conditions shown in Fig. 4. Since the communication terminal 102 is the default communication terminal for the real-time communication such as voice/video telephone in the service application conditions shown in Fig. 4, the service profiles of the communication terminals 103, 105 includes descriptions of information indicative of the transfer to the communication terminal 102 at the time of reception of the real-time voice/video telephone service and the public identifier of the communication terminal 102 as the transfer destination. Since the communication terminal 103 is defined as the default communication terminal in the case of the non-real-time voice and video distribution, the service profiles of the communication terminal 102 and the communication terminal 105 includes descriptions of information indicative of the transfer to the communication terminal 103 at the time of reception of the non-real-time voice/video distribution and the public identifier of the communication terminal 103 as the transfer destination.

If another communication terminal not included in the group actually makes a session establishment request with the public identifier of the communication terminal 102, 103, or 105 and a service type specified, the session control means 4a receives the request and sets the session in accordance with the managed service profiles. For example, if another communication terminal not included in the group specifies the public identifier of the communication terminal 103 to make a call request of the telephone service to the session control means 4a, the session control means 4a refers to the service profile (service profile managed based on the notification of the service application conditions) corresponding to the public identifier of the communication terminal 103, determines that the call request of the telephone service is transferred to the communication terminal 102, and executes a process of changing the public identifier defined as the destination of the call request from the public identifier of the communication terminal 103 to that of the communication terminal 102 to control the call connection.

If the communication terminal 104 is configured later in the group 101 with the communication terminals 102, 103, 105 configured, the communication terminal group information managing means 4c executes a process of changing the above service application conditions such that the services are provided based on the state of configuration of the new group formed with the participation of the communication terminal 104. When the communication terminal 104 is configured later, the communication terminal 104 may defined as the default communication terminal prioritized for all the services in the group 101 or, if the communication terminal 104 is a communication terminal dedicated to data communications and is not available for services such as voice telephone and video telephone, the communication terminal 104 is defined as the default communication terminal only for the non-real-time services.

Deactivation (deconfiguration) by the communication terminals is also flexibly supported. For example, if the communication terminal 102 is powered off in the group 101 consisting of the communication terminals 102, 103, and 105, the subscriber information managing means 4b cancels the registration of the communication terminal 102 in the mobile communication network. The subscriber information managing means 4b notifies the communication terminal group information managing means 4c that the communication terminal 102 is turned to the non-registered state (the registration is canceled). The communication terminal group information managing means 4c stores information of "not configured" for the communication terminal 102 in the information managed as the group 101. As a result, the communication terminal 102 is deactivated (deconfigured) in the group 101 and tuned to the invalid (not-valid) state.

The service application conditions for the group 101 are correspondingly changed based on the new state of configuration of the group. Since the communication terminal 102 is deactivated (deconfigured) in this case, the valid communication terminals are 103 and 105 in the group 101, and one of the communication terminals 103 and 105 may be defined as the default communication terminal in all the services or the process of changing the setting of the default communication terminal is executed depending on services such that one of the communication terminals is used only for the real-time services or the non-real-time services in accordance with the information of the models, etc., of the communication terminals.

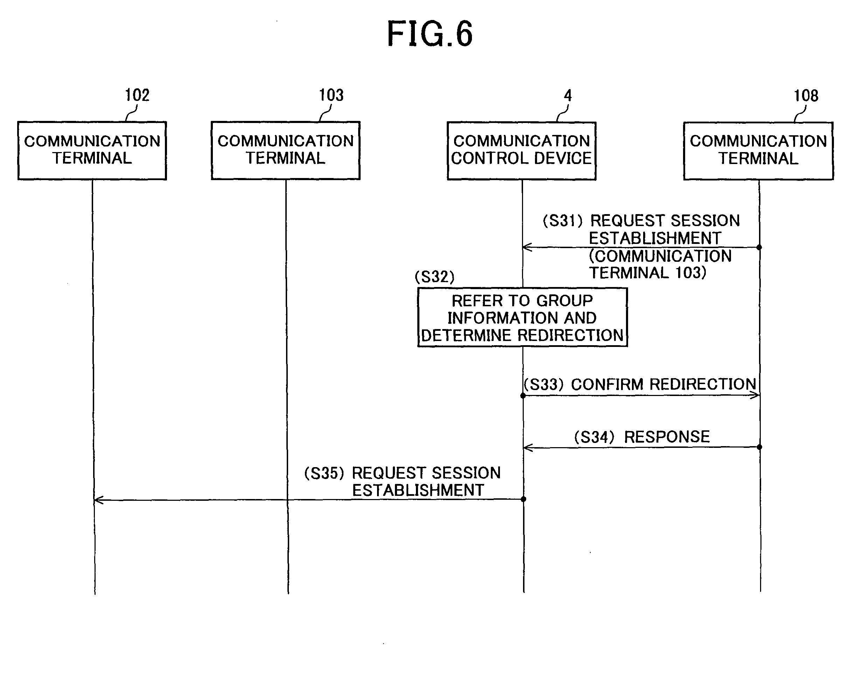

Fig. 6 is a flowchart for explaining an example of the communication control method of the present invention. Description will be made of an example when the communication terminal 108 of the communication counterpart makes a request for establishing a session to the communication terminals 102, 103 included in the group 101 in association with the above description. First, the user 109 makes a request for the session establishment from the communication terminal 108 by specifying the public identifier (such as a telephone number and an SIP-URI) of one of the communication terminals included in the group 101 of the user 107, for example, the communication terminal 103 (step S31).

The communication control device 4 of the mobile communication network 2 receives the session establishment request with the session control means 4a and, if the communication terminal 103 is configured and valid as a communication terminal included in the group 101 under the management of the communication terminal group information managing means 4c, the communication control device 4 determines to transfer the session establishment request to the communication terminal 103 to the communication terminal 102 set as the default communication terminal in the group 101 in accordance with the service application conditions for the group 101 (step S32).

The communication control device 4 confirms whether the calling communication terminal 108 permits the session establishment request to be transferred (redirected) to the default communication terminal (step S33). When the communication terminal 108 responds that the redirection may be performed (step S34), the communication control device 4 selects the communication terminal 102, changes the public identifier of the communication terminal 103 specified as the destination of the session establishment request received from the communication terminal 108 to the public identifier of the communication terminal 102, and sends out the request as the session establishment request to the communication terminal 102 (step S35). As a result, the receiving user 107 responds to the session establishment request received by the communication terminal 102.

In the above procedure, the calling communication terminal 108 may make a call with a message allowing the redirection included in advance. This eliminates the necessity of the procedures of the confirmation of redirection from the communication control device 4 to the calling side and the response thereto (steps S33 and S34). A call may be made with a message not allowing the redirection included in advance on the calling side. In this case, the redirection to another communication terminal in the group is not performed and the communication control device 4 makes a call and establishes a session with the communication terminal (the communication terminal 103 in this case) specified by the calling side.
The procedures of the confirmation and the response to the communication terminal 108 (steps S33 and S34) may completely be eliminated and the above redirection may be performed in accordance with the determination and the process only in the communication control device 4 without confirmation on the calling side.

As described above, according to the present invention, a user may utilize advance services using a plurality of communication terminals since communication terminals may be managed as a group in a mobile communication network.

Since the participation into a group of communication terminals making up the group is conducted in conjunction with the registration into the mobile communication network, changes in a group configuration may flexibly be supported and a user may enjoy services made available depending on the group configuration after the changes.

Although the subscriber information managing means, the session control means, and the communication terminal group information managing means in the communication control device of the present invention may be arranged and operated as separate and independent functions, the function provided by the communication terminal group information managing means may be added to the subscriber information managing means to form a expanded configuration. Alternatively, the communication terminal group information managing means may functionally be disposed as a kind of application to form a configuration connectable to the subscriber information managing means and the session control means.

## Claims

1. A communication control device in a mobile communication network comprising:
a communication terminal group information managing means that manages a plurality of communication terminal specified by a user as a communication terminal group of the user.

2. The communication control device as defined in claim 1, wherein
the plurality of the communication terminals managed as the communication terminal group of the user are communication terminals having respective unique public identifiers utilized for identifying and managing individual communication terminals in the mobile communication network.

3. The communication control device as defined in claim 1 or 2, further comprising
a session control means that manages and controls call connection or session connection between a communication terminal and a counterpart communication terminal that is a communication counterpart thereof, wherein
if a call connection or session connection request message for any one of the communication terminals within the communication terminal group is received from a counterpart communication terminal not included in the communication terminal group, the session control means selects at least one communication terminal from the communication terminals of the communication terminal group and sends out a call connection or session connection request message for the selected communication terminal to perform control to achieve call connection or session connection between the counterpart communication terminal not included in the communication terminal group and the selected communication terminal.

4. The communication control device as defined in claim 3, wherein
when the communication terminal managed as the communication terminal group of the user executes a configuration process into the communication control device,
the communication terminal group information managing means identifies and manages the communication terminal subjected to the executed configuration process as a communication terminal valid within the communication terminal group and as a candidate for a communication terminal to be selected from the communication terminal group.

5. The communication control device as defined in claim 3 or 4, wherein
when a configuration cancel process of a communication terminal managed as a communication terminal valid within the communication terminal group is executed for the communication control device,
the communication terminal group information managing means manages the configuration-canceled communication terminal as a communication terminal not valid within the communication terminal group such that the communication terminal is not selected from the communication terminal group.

6. The communication control device as defined in any one of claims 3 to 5, wherein
at least one communication terminal is selected from the communication terminal group in accordance with a communication service specified by a call connection or session connection request message received from a counterpart communication terminal not included in the communication terminal group.

7. The communication control device as defined in claim 6, wherein
the communication terminal group information managing means manages priority information for each of the communication terminals in the communication terminal group corresponding to a type of communication service and wherein
the session control means refers to the priority information for the specified communication service to select at least one communication terminal from the communication terminal group.

8. A communication control method of managing and controlling call connection or session connection between a communication terminal and a counterpart communication terminal that is a communication counterpart thereof, the method comprising the steps of:
managing a plurality of communication terminals having public identifiers preliminarily specified by a user as a communication terminal group of the user in advance;
identifying and managing the communication terminal subjected to an executed configuration process as a communication terminal valid within the communication terminal group when the communication terminal included in the communication terminal group executes the configuration process for a mobile communication network;
receiving a call connection or session connection request message for any one of the communication terminals in the communication terminal group from a counterpart communication terminal not included in the communication terminal group;
selecting at least one communication terminal from the communication terminals in the communication terminal group; and
sending out a call connection or session connection request message for the selected communication terminal to perform control to achieve call connection or session connection between the counterpart communication terminal not included in the communication terminal group and the selected communication terminal.

9. The communication control method as defined in claim 8, wherein
at least one communication terminal is selected from the communication terminal group in accordance with a communication service specified by the call connection or session connection request message received from the counterpart communication terminal not included in the communication terminal group.

10. A communication terminal connecting to a communication control device on a mobile communication network, comprising:
a means that configures into the communication control device a public identifier for identifying and managing the communication terminal in the communication control device,
the communication terminal being identified and managed as a communication terminal valid in a communication terminal group formed with a communication terminal having another public identifier specified by a user and as a candidate for a communication terminal to be selected from the communication terminal group at the execution of a connection process to the mobile communication network.

11. The communication terminal as defined in claim 10, further comprising
a means that notifies the communication control device of inclusion into a communication terminal group formed with a communication terminal having another public identifier.
